# EUROPÄISCHE PATENTSCHRIFT

(11) **EP 3 119 648 B1**
(45) Veröffentlichungstag und Bekanntmachung des Hinweises auf die Patenterteilung: **18.09.2019**
(21) Anmeldenummer: 15710716.0
(22) Anmeldetag: 10.03.2015
(51) Int. Cl.: B60T 7/12, B60T 7/22, B60T 8/88

(54) **VERFAHREN ZUM BETRIEB EINES AUTONOM ARBEITENDEN FAHRSICHERHEITS- ODER FAHRERASSISTENZSYSTEMS EINES KRAFTFAHRZEUGS**
METHOD FOR OPERATING AN AUTONOMOUSLY OPERATING DRIVING SAFETY OR DRIVER ASSISTANCE SYSTEM OF A MOTOR VEHICLE
PROCÉDÉ POUR FAIRE FONCTIONNER UN SYSTÈME À FONCTIONNEMENT AUTONOME DE SÉCURITÉ ACTIVE OU D'ASSISTANCE AU CONDUCTEUR D'UN VÉHICULE AUTOMOBILE

(30) Priorität: 21.03.2014 DE 102014004110
(43) Veröffentlichungstag der Anmeldung: 25.01.2017
(73) Patentinhaber: WABCO GmbH, 30453 Hannover (DE)
(72) Erfinder: WULF, Oliver, 31535 Neustadt (DE)
(74) Vertreter: Lauerwald, Jörg
(86) Internationale Anmeldenummer: PCT/EP2015/000542
(87) Internationale Veröffentlichungsnummer: WO 2015/139826

(56) Entgegenhaltungen:
- US-A1- 2004 193 374
- US-A1- 2004 193 374
- US-A1- 2007 299 610
- US-A1- 2007 299 610
- US-A1- 2010 007 728
- US-A1- 2010 007 728
- US-B1- 6 318 819

## Beschreibung

Die Erfindung betrifft ein Verfahren zum Betrieb eines autonom arbeitenden Fahrsicherheits- oder Fahrerassistenzsystems eines Kraftfahrzeugs gemäß dem Oberbegriff des Patentanspruchs 1.

Autonom arbeitende Fahrsicherheits- oder Fahrerassistenzsysteme für Kraftfahrzeuge sind in unterschiedlichen Ausführungen bekannt. Solche Systeme weisen Sensoren auf, die zumindest das Vorfeld des Fahrzeugs in Fahrtrichtung sensorisch erfassen, und deren Daten in einem Computer mittels geeigneter Software auswertet werden. Auf der Grundlage der durch diese Datenverarbeitung gewonnenen Erkenntnisses kann der Computer über entsprechende Steuereinrichtungen und Aktuatoren Brems-, Geschwindigkeits-, Abstands-, Kompensations- und/oder Ausweichregelungen selbsttätig auslösen und durchführen.

Ausgelöst durch die EG-Verordnung Nr. 661/2009 werden zunehmend als AEBS (Advanced Emergency Braking System) bekannte Notbremssysteme in Nutzfahrzeugen eingesetzt, die beim Vorliegen bestimmter bremsrelevanter Sensordaten optische und/oder akustische Signale ausgeben und erforderlichenfalls autonom Notbremsungen mit einer größtmöglichen Verzögerung des Fahrzeugs einleiten sowie regeln, um eine Kollision mit einem im Fahrzeugvorfeld fahrenden oder anhaltenden Fahrzeug oder mit einem stationären Hindernis zu vermeiden, oder zumindest um die Folgen einer bevorstehenden Kollision zu mindern.

In einem derartigen Notbremssystem, wie beispielsweise dem von der Anmelderin bekannten Notbremssystem OnGuardPLUS®, soll aus Sicherheitsgründen jeweils nach dem Einschalten der Motorzündung zunächst ein Überprüfungsvorgang durchgeführt werden, bei dem die für den Betrieb des Fahrsicherheits- oder Fahrerassistenzsystems notwendigen Sensordaten und Parametereinstellungen auf ihre Plausibilität überprüft werden. Dadurch entsteht ein Konflikt zwischen der geforderten vollständigen Funktionssicherheit und der unmittelbaren Verfügbarkeit des Notbremssystems, denn erst nach dem Abschluss des Überprüfungsvorgangs ist das Fahrsicherheits- oder Fahrerassistenzsystem betriebsbereit und wird als funktionssicher freigegeben. Während der ersten Fahrkilometer oder Fahrminuten nach dem Start, also während des Überprüfungsvorgangs, ist ein solches Fahrsicherheits- oder Fahrerassistenzsystem daher deaktiviert. Dies kann dem Fahrer durch ein gelbes Warnlicht angezeigt werden. Eine solche Warnlichtanzeige ist zumindest im Nutzfahrzeugbereich bei inaktivem Notbremssystem obligatorisch. Dies wird von einem Fahrer eines Kraftfahrzeugs aber möglicherweise als störend oder irritierend empfunden. Zudem steht das Fahrsicherheits- oder Fahrerassistenzsystem erst mit einer zeitlichen Verzögerung nach dem Antritt der Fahrt zur Verfügung.

Aus der EP 1 934 075 B1 ist ein elektronisches Fahrdynamikregelsystem eines Landfahrzeugs zum Lenk- und Bremseingriff bekannt, bei dem eine Gierwinkelgeschwindigkeit und/oder eine Querbeschleunigung des Eigenfahrzeugs mittels einer Sensoranordnung erfasst werden. Diese Daten werden innerhalb einer Zeitspanne, welche kürzer als eine halbe Sekunde ist, auf ihre Plausibilität überprüft, und diese Daten gehen dann als Istgrößen in eine Berechnung fahrdynamischer Sollgrößen des Fahrdynamikregelsystems ein. Während der Plausibilitätsüberprüfung der Signale werden die Bremskräfte einer Bremsanlage und/oder die Lenkkräfte einer Lenkeinrichtung des Fahrzeugs jeweils auf ein für die Sicherheit des Fahrzeugs als unkritisch beurteiltes Niveau begrenzt.

Vor diesem Hintergrund liegt der Erfindung die Aufgabe zugrunde, ein Verfahren zum Betrieb eines autonom arbeitenden Fahrsicherheits- oder Fahrerassistenzsystems eines Kraftfahrzeugs anzugeben, bei dem der Konflikt zwischen Funktionssicherheit sowie Verfügbarkeit verringert ist, und welches im Betrieb dennoch komfortabel ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die US2007/0299610A1 zeigt ein Sicherheitssystem für ein Fortbewegungsmittel sowie hierauf bezogenes Verfahren, wobei bei oder nach Einleiten eines Fahrmanövers durch den Führer des Fortbewegungsmittels das Sicherheitssystem dieses Fahrmanöver in optimierter Form vorgibt, unterstützt und/oder vorschlägt.

Die US2010/0007728A1 beschreibt ein System zur multimodalen Bestimmung von Objekten in einem vor oder hinter dem Fahrzeug liegenden Blickfeld.

Die US2004/0193374A1 beschreibt ein Verfahren zur Kollisionsvermeidung mit automatisch aktivierter Bremsung und Lenkung, wobei in Abhängigkeit von unterschiedlichen Abständen zu vorausliegenden Objekten entweder ein Bremseingriff oder ein Brems- und Lenkungseingriff vorgenommen wird.

Der Erfindung liegt die Erkenntnis zugrunde, dass ein autonom arbeitendes Fahrsicherheits- oder Fahrerassistenzsystems eines Kraftfahrzeugs nach Fahrtbeginn zunächst mit einem konservativ festgelegten Eingangsparametersatz in einem sogenannten Hilfsbetrieb betrieben werden kann, bis eine Plausibilitätsprüfung aller relevanten Sensordaten und Parametereinstellungen, welche zur Freigabe des Normalbetriebs mit der Möglichkeit einer extremen Fahrzeugverzögerung oder Ausweichreaktion notwendig ist, abgeschlossen ist.

Demnach geht die Erfindung aus von einem Verfahren zum Betrieb eines autonom arbeitenden Fahrsicherheits- oder Fahrerassistenzsystems eines Kraftfahrzeugs, welches ständig fahrzeugbezogene und/oder fahrzeugumfeldbezogene Daten erfasst, welches auf der Grundlage dieser Daten ständig wiederholend eine Entscheidung darüber trifft, ob ein Fahrsicherheits- oder Fahrerassistenzsystemvorgang autonom eingeleitet oder durchgeführt werden soll, und welches einen Überprüfungsvorgang durchführt, bei dem für den Betrieb des Fahrsicherheits- oder Fahrerassistenzsystems notwendige Sensordaten und Parametereinstellungen auf ihre Plausibilität überprüft werden. Zur Lösung der gestellten Aufgabe sieht die Erfindung vor, dass der Überprüfungsvorgang unmittelbar nach dem Fahrtbeginn des Kraftfahrzeugs durchgeführt wird, wobei in dem Zeitraum zwischen dem Fahrtbeginn des Kraftfahrzeugs und dem Beginn des normalen Betriebs des Fahrsicherheits- oder Fahrerassistenzsystems während eines Überprüfungszeitraumes ein Hilfsverfahren für einen sofortigen und sicheren Hilfsbetrieb des Fahrsicherheits- oder Fahrerassistenzsystems mit geringfügig reduziertem Funktionsumfang genutzt wird.

Dieser Funktionsumfang ist so gewählt, dass dem Fahrer kein Hinweis darauf gegeben werden muss, dass das Fahrsicherheits- oder Fahrerassistenzsystems etwas eingeschränkt tätig ist.

Im Folgenden wird zwischen einem Hauptverfahren oder Normalverfahren für einen Hauptbetrieb oder Normalbetrieb und einem Hilfsverfahren für einen Hilfsbetrieb eines autonom arbeitenden Fahrsicherheits- oder Fahrerassistenzsystems unterschieden. Unter einem Betrieb des Fahrsicherheits- oder Fahrerassistenzsystems wird der Haupt- oder Normalbetrieb verstanden. Das Fahrsicherheits- oder Fahrerassistenzsystem arbeitet nach einer Startphase zunächst im Hilfsbetrieb und anschließend im Hauptbetrieb oder Normalbetrieb.

Ein Fahrsicherheits- oder Fahrerassistenzsystem gemäß der Erfindung kann beispielsweise als ein autonom arbeitendes Notbremssystem (AEBS), als ein Abstands- und Geschwindigkeitsregelsystem, und/oder als ein Lenkeingriffssystem tätig sein. Die folgende Beschreibung bezieht sich im Wesentlichen auf ein autonom arbeitendes Notbremssystem. Ein Hilfsverfahren für einen sofortigen und sicheren Hilfsbetrieb gemäß der Erfindung ist grundsätzlich auch für andere Fahrsicherheits- oder Fahrerassistenzsysteme als das im Folgenden beschriebene Notbremssystem verwendbar.

Durch die Erfindung wird ein Hilfsbetrieb für ein Fahrsicherheits- oder Fahrerassistenzsystem mit einer reduzierten Eingangsempfindlichkeit zur Verfügung gestellt. In diesem Betriebsmodus kann ein Überprüfungszeitraum, welcher unmittelbar nach dem Motorstart beziehungsweise nach dem Fahrtbeginn beginnt, überbrückt werden, ohne dass das Fahrsicherheits- oder Fahrerassistenzsystem deaktiviert werden muss. Während des Hilfsbetriebs können folglich die notwendigen Plausibilitätstests durchgeführt werden, ohne dass notwendigerweise eine gelbe Warnlampe oder eine in anderer Weise dem Fahrer signalisierte Mitteilung aktiviert wird.

In einem Überprüfungszeitraum werden die notwendigen Sensordaten und Parametereinstellungen, welche zum normalen Betrieb des Fahrsicherheits- oder Fahrerassistenzsystem erforderlich sind, auf ihre Plausibilität überprüft. Nach einer Bereitschaftsrückmeldung für alle überprüften Sensoren beziehungsweise Sensordaten und Einstellungen sowie dem folgenden erfolgreichen Abschluss des Überprüfungsvorgangs wird das Fahrsicherheits- oder Fahrerassistenzsystem zum normalen Betrieb freigegeben.

Vom Fahrer wird der anfängliche Hilfsbetrieb des Fahrsicherheits- oder Fahrerassistenzsystems nicht bemerkt. Vielmehr kann er davon ausgehen, dass das Fahrsicherheits- oder Fahrerassistenzsystem unmittelbar nach dem Einschalten der Motorzündung betriebsbereit ist. Die hinsichtlich des Funktionsumfangs zunächst geringfügig eingeschränkte Betriebsbereitschaft wirkt sich für ihn nicht störend aus. Dadurch werden einerseits die gesetzlichen Vorschriften für solche sicherheitsrelevanten Systeme eingehalten, andererseits wird der Betriebs- und Fahrkomfort des Fahrzeugs nicht beeinträchtigt. Insbesondere wird mit dem Fahrtbeginn ein sofortiger und sicherer Hilfsbetrieb des Fahrsicherheits- oder Fahrerassistenzsystems zur Verfügung gestellt.

Der sofortige Hilfsbetrieb wird durch ein Hilfsverfahren ermöglicht, welches einen reduzierten oder vereinfachten Parametersatz verwendet. Das Hilfsverfahren arbeitet mit einer geringeren Eingangsempfindlichkeit als das Verfahren im Normalbetrieb. Demnach verwendet das Hilfsverfahren eine geringere Anzahl, einen begrenzten Bereich und/oder eine gröbere Abstufung von fahrzeugbezogenen und/oder fahrzeugumfeldbezogenen Daten. In der Folge reagiert das Hilfsverfahren durch bestimmte vereinfachte Annahmen auch unempfindlicher auf anfängliche, noch nicht erkannte Fehler, welche beispielsweise durch weniger optimale Sensorausrichtungen, relativ hohe Signalschwankungsbreiten, relativ hohe Signal-offsets oder ungenaue Geschwindigkeitssignale usw. auftreten können.

Aufgrund der noch nicht abgeschlossenen Sicherheitsüberprüfung und Plausibilisierung der Daten ist es sinnvoll, im Hilfsbetrieb einen eventuellen Eingriff des Fahrsicherheits- oder Fahrerassistenzsystems auf ein unkritisches Niveau abzuschwächen. Dementsprechend kann vorgesehen sein, dass während des Hilfsbetriebs eines als Notbremssystem tätigen Fahrsicherheits- oder Fahrerassistenzsystems ein Grenzwert für eine maximal wirksame Bremskraft einer durch das Notbremssystem ansteuerbaren Bremsanlage des Kraftfahrzeugs herabgesetzt wird.

An dieser Stelle sei erwähnt, dass es grundsätzlich möglich ist, für den Fall, dass das Hauptverfahren im Fahrbetrieb einmal ausfallen sollte, zumindest temporär jederzeit das Hilfsverfahren zu nutzen.

Bei einer bevorzugten Ausführungsform eines Verfahrens zum Betrieb eines als autonomes Notbremssystem tätigen Fahrsicherheits- oder Fahrerassistenzsystems eines Kraftfahrzeugs kann vorgesehen sein, dass ständig antriebsrelevante Daten des Kraftfahrzeugs, fahrstreckenbezogene, verkehrsbezogene und/oder umweltbezogene Daten sowie Daten zur Beurteilung der Fahraktivitäten des Fahrers des Kraftfahrzeugs erfasst werden, dass ständig der Ort, die Geschwindigkeit und die Beschleunigung wenigstens eines vorausfahrenden Kraftfahrzeugs und/oder der Ort wenigstens eines ortsfesten Hindernisses erfasst wird, und dass auf der Grundlage der erfassten Daten ständig wiederholend eine Entscheidung darüber getroffen wird, ob eine Kollision des Kraftfahrzeugs mit wenigstens einem vorausfahrenden Fahrzeug und/oder einem vorausliegenden ortsfesten Hindernis verhindernder oder zumindest die Folgen einer solchen Kollision verringernder Notbremsvorgang autonom eingeleitet oder durchgeführt werden soll, wobei das Hilfsverfahren zum Hilfsbetrieb des Fahrsicherheits- oder Fahrerassistenzsystems zuvor festgelegte Annahmen und/oder sofort verfügbare Daten über den Betriebszustand des Kraftfahrzeugs, über die Geometrie der aktuellen Fahrstrecke, über einen aktuellen Fahrgeschwindigkeitsbereich des Kraftfahrzeugs, über die aktuelle Verkehrssituation sowie über die aktuellen Fahraktivitäten des Fahrers nutzt, wobei während des Ablaufs des Hilfsverfahrens die für den Betrieb des Verfahrens notwendigen Sensordaten und Parametereinstellungen auf ihre Plausibilität überprüft werden, und wobei während des Ablaufs des Hilfsverfahrens aus plausiblen Sensordaten und Parametereinstellungen ein Start-Szenario mit den Anfangssensordaten und Anfangsparametereinstellungen für den Beginn des Betriebs des Fahrsicherheits- oder Fahrerassistenzsystems mit nicht reduziertem Funktionsumfang erzeugt wird.

Demnach erfasst eine im Fahrzeug vorhandene Sensorik relevante Daten des Eigenfahrzeugs sowie seines Umfelds und wertet diese zusammen mit den Betriebsdaten des Eigenfahrzeugs mittels einer Einrichtung zur elektronischen Datenverarbeitung aus, in der ein entsprechender Verarbeitungsalgorithmus abgespeichert ist. Die Umfeldsensorik kann Radar-, Lidar-, Video- und/oder andere bekannte Messsysteme umfassen, welche zur Abstands-, Positions- und/oder Geschwindigkeitsmessung geeignet sind. Relevante Betriebsdaten des Eigenfahrzeugs stehen in der Regel ohnehin über einen in modernen Fahrzeugen meist vorhandenen Datenbus eines Borddatennetzsystems des Fahrzeugs zur Verfügung.

Wird durch die Datenauswertung eine drohende Kollision mit einem vorausfahrenden Kraftfahrzeug oder einem ortsfesten Hindernis erkannt, kann das Notbremssystem autonom einen Notbremsvorgang mit einer maximal möglichen Bremskraft beziehungsweise einer maximal möglichen Verzögerung des Eigenfahrzeugs einleiten, um die Kollision zu vermeiden oder zumindest die Fahrzeuggeschwindigkeit soweit zu verringern, dass die Folgen einer Kollision möglichst gering gehalten werden.

Befindet sich das Notbremssystem noch in der beschriebenen Überprüfungsphase nach Fahrtbeginn, ist an Stelle des Haupt- oder Normalverfahrens das Hilfsverfahren zum Hilfsbetrieb des Fahrsicherheits- oder Fahrerassistenzsystems aktiv. Für das Hilfsverfahren werden vorab vereinfachte Annahmen festgelegt sowie sofort verfügbare Sensordaten und Parametereinstellungen, beispielsweise von vorangegangenen Fahrten, genutzt, die einen sofortigen Hilfsbetrieb ermöglichen, während die für den normalen Betrieb notwendigen Sensordaten und Parametereinstellungen auf ihre Plausibilität überprüft werden. Die noch nicht auf ihre Plausibilität geprüften Sensordaten und Parametereinstellungen werden während des Hilfsbetriebs vorzugsweise so verändert und/oder beschränkt, dass gegebenenfalls vorhandene und noch nicht erkannte Fehler nicht zu einem unsicheren Betrieb es Fahrsicherheits- oder Fahrerassistenzsystems führen. Aus den plausibilisierten Sensordaten und Parametereinstellungen wird während des Hilfsbetriebs ein Start-Szenario mit den Anfangssensordaten und Anfangsparametereinstellungen für den Beginn des Normalbetriebs des Fahrsicherheits- oder Fahrerassistenzsystems mit nicht reduziertem Funktionsumfang erzeugt. Sobald alle erforderlichen Sensordaten und Parametereinstellungen plausibel sind, ist das Hauptverfahren betriebsbereit, worauf das Hilfsverfahren beendet werden kann und auch beendet werden wird.

Gemäß einer anderen Ausführungsvariante kann die Empfindlichkeit des Hilfsverfahrens der Empfindlichkeit des Normalbetriebverfahrens angenähert werden, indem die während des Betriebs des Hilfsverfahrens genutzten, zuvor festgelegten Daten und Parameter sukzessive durch ermittelte, auf ihre Plausibilität überprüfte Daten und Parameter ersetzt und/oder ergänzt werden. Dadurch wird das Hilfsverfahren nach dem Fahrtbeginn ständig verfeinert.

Außerdem kann vorgesehen sein, dass der Überprüfungszeitraum, in dem der Überprüfungsvorgang durchgeführt wird, während dem die für den Betrieb des Fahrsicherheits- oder Fahrerassistenzsystems notwendigen Sensordaten und Parametereinstellungen auf ihre Plausibilität überprüft werden und in dem das Hilfsverfahren zum Hilfsbetrieb des Fahrsicherheits- oder Fahrerassistenzsystems genutzt wird, der Zeitraum vom Fahrtbeginn bis zum erfolgreichen Abschluss aller Überprüfungs- und Plausibilisierungstätigkeiten ist. Dieser Zeitraum ist variabel und hängt von der Art der Plausibilisierungsfunktionen, dem Fahrprofil sowie den Umweltbedingungen ab.

Gemäß einer dazu alternativen Ausführungsvariante kann vorgesehen sein, dass der Überprüfungszeitraum, in dem der Überprüfungsvorgang durchgeführt wird, während dem die für den Betrieb des Fahrsicherheits- oder Fahrerassistenzsystems notwendigen Sensordaten und Parametereinstellungen auf ihre Plausibilität überprüft werden und in dem das Hilfsverfahren zum Hilfsbetrieb des Fahrsicherheits- oder Fahrerassistenzsystems genutzt wird, ein Zeitraum ist, in dem das Fahrzeug eine Fahrstrecke mit einer zuvor bestimmten minimalen Länge zurücklegt.

Um die notwendigen Sensordaten und Parametereinstellungen auf ihre Plausibilität zu überprüfen, werden von dem Eigenfahrzeug bestimmte Fahrzustände durchfahren, wie beispielsweise eine Geradeausfahrt, eine Kurvenfahrt, und/oder eine Fahrt mit einer bestimmten Mindestgeschwindigkeit und andere. Es ist daher vorteilhaft, nicht einen Zeitraum sondern eine bestimmte Fahrstrecke nach Fahrtbeginn beziehungsweise nach dem Einschalten der Motorzündung als Basis für die Länge des Überprüfungsvorgangs heranzuziehen.

Der Überprüfungszeitraum kann bevorzugt ein Zeitraum sein, in dem das Eigenfahrzeug eine Fahrstrecke s_{dis} zwischen 2 km und 15 km zurücklegt. Es hat sich herausgestellt, dass üblicherweise nach einer Fahrstrecke von 10 km alle vorgesehenen Sensordaten und Parametereinstellungen auf ihre Plausibilität überprüft sind und aus den plausiblen Sensordaten und Parametereinstellungen ein Start-Szenario mit den Anfangssensordaten und Anfangsparametereinstellungen für den Beginn des Betriebs des Fahrsicherheits- oder Fahrerassistenzsystems mit nicht reduziertem Funktionsumfang erzeugt ist.

Im Folgenden sind einige bevorzugte Annahmen für den Betrieb des Hilfsverfahrens erwähnt, wobei die beispielhaft genannten Zahlen beziehungsweise Zahlenbereiche sich insbesondere für Nutzfahrzeuge als sinnvoll und vorteilhaft herausgestellt haben. Diese Annahmen ermöglichen während des genannten Überprüfungszeitraumes einen sofortigen aber dennoch sicheren Hilfsbetrieb des Fahrsicherheits- oder Fahrerassistenzsystems. Weitere Annahmen sind grundsätzlich möglich.

Als eine erste Annahme für das Hilfsverfahren zum Hilfsbetrieb des Fahrsicherheits- oder Fahrerassistenzsystems kann eine zumindest annähernd kurvenfreie Fahrstrecke angenommen werden. Beispielsweise kann für die Fahrstrecke für das Hilfsverfahren ein Kurvenradius von |r_{curve}| > 1000 m angenommen werden. Demnach würde im Notbremsfall bei einem autonomen Notbremssystem im Hilfsbetrieb ein Bremseingriff ermittelt, der für eine Verkehrssituation auf einer gerade Straße ausgelegt ist. In Kurven werden somit im Vergleich zum Normalbetrieb reduzierte Bremseingriffe erfolgen.

Als eine zweite Annahme für das Hilfsverfahren zum Hilfsbetrieb des Fahrsicherheits- oder Fahrerassistenzsystems kann ein begrenzter Fahrgeschwindigkeitsbereich angenommen werden. Beispielsweise kann ein Fahrgeschwindigkeitsbereich von 60 km/h < v_{vehicle} < 90 km/h für das Hilfsverfahren angenommen werden. Demnach würde im Notbremsfall bei einem autonomen Notbremssystem im Hilfsbetrieb ein Bremseingriff ermittelt, welcher für eine Verkehrssituation innerhalb dieses Geschwindigkeitsbereichs ausgelegt ist. Bei einem relativ langsamen Stadtverkehr oder einem relativ schnellen Autobahnverkehr werden somit im Vergleich zum Normalbetrieb reduzierte Bremseingriffe erfolgen.

Als eine dritte Annahme für das Hilfsverfahren zum Hilfsbetrieb des Fahrsicherheits- oder Fahrerassistenzsystems kann angenommen werden, dass sich ein vorausfahrendes Fahrzeug relativ zum eigenen Fahrzeug mit einer begrenzten Geschwindigkeit in Querrichtung zur Hauptfahrtrichtung des eigenen Fahrzeugs bewegt. Beispielsweise kann für das Hilfsverfahren eine relative Quergeschwindigkeit eines vorausfahrenden Fahrzeugs von |v_{y}l < 0,5 m/s angenommen werden. Ein erkanntes vorausfahrendes Fahrzeug, welches sich in der Spur des Eigenfahrzeugs bewegt, besitzt demnach keine hier relevante Quergeschwindigkeit. Diese Quergeschwindigkeit entsteht, wenn ein vorausfahrendes Fahrzeug in die eigene Fahrspur einschert oder aus dieser ausschert. Auf in die Fahrbahn des Eigenfahrzeugs einscherende oder von dieser ausscherende Fahrzeuge wird nur mit einem im Vergleich zum Normalbetrieb reduziertem Bremseingriff reagiert.

Als eine vierte Annahme für das Hilfsverfahren zum Hilfsbetrieb des Fahrsicherheits- oder Fahrerassistenzsystems kann angenommen werden, dass ein detektiertes Objekt sich für einen Mindestzeitraum im Fahrzeugumfeld befindet. Beispielsweise kann für das Hilfsverfahren ein Mindestzeitraum, in dem sich ein detektiertes Objekt im Fahrzeugumfeld befindet von t_{obj} > 3 s angenommen werden. Demnach geht das Hilfsverfahren von einem gesicherten Nachweis eines relevanten Objekts, der sogenannten Objektlebenszeit aus, wenn sich dieses länger als 3 Sekunden im Sichtfeld der Sensorik des Eigenfahrzeugs befindet. Diese reduzierte Eingangsempfindlichkeit führt demnach zu einem Ausfiltern von Objekten, die spät im Blickfeld der Sensorik auftauchen und dann sehr schnell einen kritischen Abstand zum Eigenfahrzeug haben. Dadurch können Fehlsteuerungen des Notbremssystems aufgrund noch nicht richtig ausgerichteter Sensoren direkt nach Fahrtbeginn vermieden werden.

Als eine fünfte Annahme für das Hilfsverfahren zum Hilfsbetrieb des Fahrsicherheits- oder Fahrerassistenzsystems können anhaltende Fahrzeuge als stationäre Hindernisse angenommen werden. Demnach wird für das Hilfsverfahren nur zwischen bewegten und stationären Objekten unterschieden. Beispielsweise wird zur Vereinfachung ein Fahrzeug, welches an einem Stauende anhält, als ein ortsfestes Hindernis beurteilt. Dadurch werden die negativen Folgen einer möglichen Fehlklassifikation unterdrückt, welche zum Beispiel durch eine fehlerhafte Geschwindigkeitsmessung geschehen könnten.

Außerdem kann vorgesehen sein, dass das Fahrsicherheits- oder Fahrerassistenzsystem außerhalb des Überprüfungszeitraums, in welchem das Hilfsverfahren zum Hilfsbetrieb des Fahrsicherheits- oder Fahrerassistenzsystems genutzt wird, bei Fahrgeschwindigkeiten unterhalb eines Geschwindigkeitsgrenzwerts deaktiviert beziehungsweise bei Erreichen und oberhalb des Geschwindigkeitsgrenzwerts aktiviert wird.

Demnach kann für den Start des Hauptverfahrens eine Mindestgeschwindigkeit festgelegt sein. Da gängige Umfeldsensoren, wie Radaranlagen oder Geschwindigkeitsmesser bei sehr niedrigen Fahrgeschwindigkeiten messprinzipbedingt häufig fehlerhaft arbeiten oder mit hohen systematischen Fehlern behaftet sind, ist es sinnvoll, den Normalbetrieb des Fahrsicherheits- oder Fahrerassistenzsystems bei solch niedrigen Fahrgeschwindigkeiten zu deaktivieren. Ein Geschwindigkeitsgrenzwert von v_{vehicle_lim} = 15 km/h, bei dessen Unterschreitung das Fahrsicherheits- oder Fahrerassistenzsystem deaktiviert wird, hat sich als sinnvoll heraus gestellt.

Gemäß einem Ausführungsbeispiel kann das erfindungsgemäße Verfahren bei einem Fahrsicherheits- oder Fahrerassistenzsystem eines Nutzfahrzeugs, welches als ein autonom arbeitendes Notbremssystem ausgebildet ist, zum Einsatz kommen. Das Fahrzeug sei hierbei mit einem Radar-System ausgerüstet, wenngleich auch ein Lidar-System oder eine Kamera zum Einsatz gelangen kann. Weiterhin weist das Fahrzeug eine Bremsanlage auf, welche durch das Notbremssystem ansteuerbar und mittels Aktuatoren betätigbar ist.

Bei dem Verfahren werden in einem Hauptbetrieb oder Normalbetrieb des Notbremssystems auf Basis eines Eingangssatzes von Sensordaten und Parametereinstellungen ständig antriebsrelevante Daten des Nutzfahrzeugs, fahrstreckenbezogene, verkehrsbezogene und/oder umweltbezogene Daten sowie Daten zur Beurteilung der Fahraktivitäten des Fahrers des Nutzfahrzeugs erfasst. Weiterhin wird ständig der Ort, die Geschwindigkeit und die Beschleunigung wenigstens eines vorausfahrenden Kraftfahrzeugs und/oder der Ort wenigstens eines ortsfesten Hindernisses erfasst. Die erfassten Daten werden in flüchtigen und/oder nichtflüchtigen Speichern eines Computers gespeichert und mittels einer Software einem Rechenalgorithmus unterzogen.

Auf der Grundlage der erfassten und ausgewerteten Daten trifft das Notbremssystem beziehungsweise dessen Steuerelektronik ständig wiederholend eine Entscheidung darüber, ob eine Kollision des eigenen Fahrzeugs mit wenigstens einem vorausfahrenden Fahrzeug und/oder einem vorausliegenden ortsfesten Hindernis droht, und ob ein dies verhindernder oder zumindest die Folgen einer solchen Kollision verringernder Notbremsvorgang autonom eingeleitet oder durchgeführt werden soll.

Nach jedem Neustart des Fahrzeugs führt das Verfahren zunächst einen Überprüfungsvorgang durch, bei dem die für den Betrieb des Notbremssystems notwendigen Sensordaten und Parametereinstellungen auf ihre Plausibilität überprüft werden. Das Fahrzeug befindet sich während der ersten etwa 10 km Fahrstrecke in diesem Überprüfungsmodus. Der Haupt- oder Normalbetrieb des Notbremssystems steht in dieser Zeit nicht zur Verfügung. Stattdessen wird ein Hilfsverfahren durchgeführt, das einen Hilfsbetrieb des Notbremssystems mit geringfügig reduziertem Funktionsumfang gewährleistet. Der Hilfsbetrieb des Notbremssystems ist quasi sofort nach dem Fahrtbeginn bereit.

Das Hilfsverfahren zum Hilfsbetrieb des Notbremssystems arbeitet mit zuvor festgelegten Annahmen, mit während der letzten vorherigen Fahrten ermittelten Parametern und/oder mit sofort verfügbaren Daten über den Betriebszustand des Fahrzeugs, über die Geometrie der aktuellen Fahrstrecke, über einen aktuellen Fahrgeschwindigkeitsbereich des Fahrzeugs, über die aktuelle Verkehrssituation sowie über die aktuellen Fahraktivitäten des Fahrers. Mit den festgelegten Annahmen wird ein, gegenüber dem Hauptverfahren reduzieren Eingangssatz von Sensordaten und Parametereinstellungen erzeugt, der den sofortigen Hilfsbetrieb ermöglicht. Einen beispielhaften Parametersatz mit reduzierten Parametern zeigt die folgende Tabelle:

| | |
|---|---|
| Streckencharakteristik: | Kurvenradius: \|r_{curve}\| > 1000 m |
| Fahrgeschwindigkeit: | Geschwindigkeitsbereich 60 km/h < v_{vehicle} < 90 km/h |
| Einscherende Fahrzeuge: | Quergeschwindigkeit: \|v_{y}\| < 0,5 m/s |
| Objekterkennung: | Objektlebenszeit: t_{obj} > 3 s |
| Objektkinetik: | stationäres Objekt: v_{obj} = 0 m/s |

Durch diese Annahmen ist eine vorsichtige beziehungsweise konservative Abschätzung für Nutzfahrzeuge getroffen, die für einen Hilfsbetrieb eines Notbremssystems hinreichend sicher ist, aber keine unnötigen autonomen Notbremsungen auslöst. Das Hilfsverfahren ermöglicht demnach eine vollständige Funktionsfähigkeit des Notbremssystems bei einem im Wesentlichen geraden Streckenverlauf, mittleren Fahrgeschwindigkeiten, eher allmählich auf die eigene Fahrbahn einscherende Fahrzeuge, vorausfahrende Fahrzeuge, welche sich für wenigstens einige Sekunden im Blickfeld befinden, und anhaltende Fahrzeuge, welche als ein feststehendes Hindernis beurteilt werden. In allen anderen Verkehrssituationen führt das Hilfsverfahren nur eingeschränkte oder gar keine Bremseingriffe durch.

Die während des Betriebs des Hilfsverfahrens genutzten, zuvor festgelegten Daten und Parameter können sukzessive durch ermittelte, auf ihre Plausibilität überprüfte Daten und Parameter ersetzt und/oder ergänzt werden.

Für den Fall, dass ein Bremseingriff als notwendig erkannt wird, während sich das Notbremssystem im Hilfsbetrieb befindet, wird, im Vergleich zu einer im Grenzfall maximal möglichen Verzögerung des Fahrzeugs, ein etwas abgeschwächter Bremseingriff an der Bremsanlage durchgeführt.

Während des Ablaufs des Hilfsverfahrens werden die für den Betrieb des Hauptverfahrens notwendigen Sensordaten und Parametereinstellungen auf ihre Plausibilität überprüft. Aus den plausiblen Sensordaten und Parametereinstellungen wird ein Start-Szenario mit den Anfangssensordaten und Anfangsparametereinstellungen für den Beginn des Normalbetriebs des Notbremssystems erzeugt.

Der Fahrer bemerkt von dem Hilfsverfahren und dem Hilfsbetrieb, welches dem eigentlichen Hauptverfahren und dem Hauptbetrieb vorgeschaltet ist, nichts, da das Notbremssystem während der ersten Fahrkilometer bereits mit verringerter Eingangsempfindlichkeit aktiv ist. Während der Plausibilisierung der Sensordaten und Parametereinstellungen für den eigentlichen Betrieb wird dem Fahrer somit keine, möglicherweise irritierende, Warnmeldung des Notbremssystems angezeigt. Vielmehr steht dem Fahrzeug beziehungsweise dem Fahrer ein sofortiger Hilfsbetrieb des autonomen Notbremssystems unmittelbar nach dem Fahrtbeginn zur Verfügung.

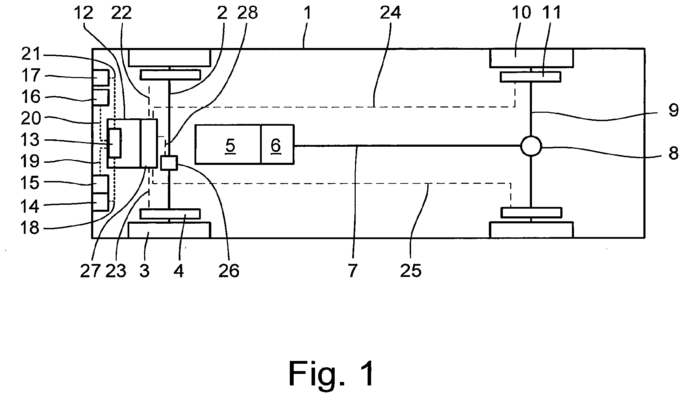

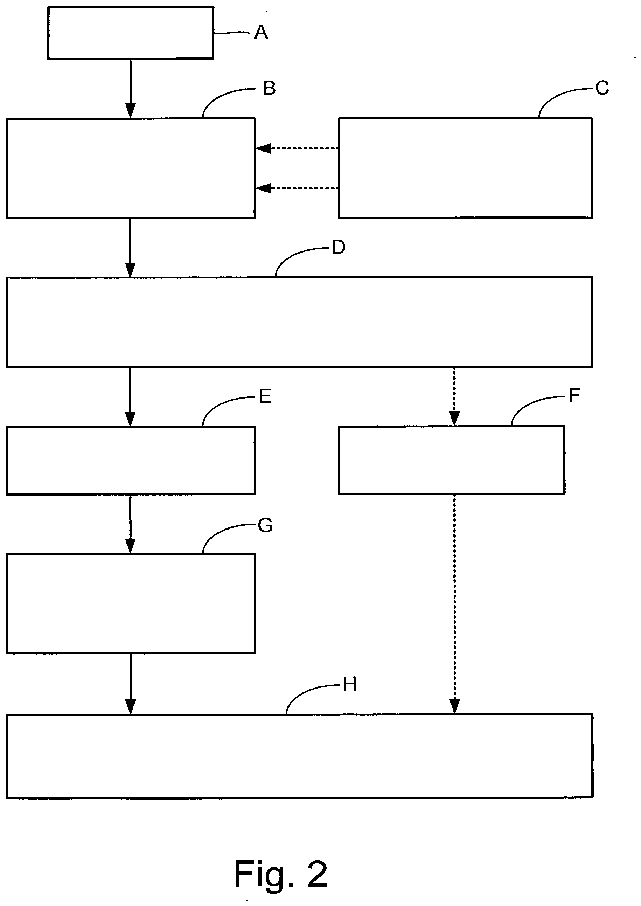

Zur weiteren Verdeutlichung der Erfindung dient die beigefügte Zeichnung. In dieser zeigt Fig. 1 eine schematische Darstellung eines Kraftfahrzeugs, welches mit einem Fahrsicherheits- oder Fahrerassistenzsystems ausgestattet ist, welches gemäß dem hier beschriebenen Verfahren betrieben werden kann, und Fig. 2 einen Ablaufplan, dem das Verfahren gemäß der Erfindung folgt.

Das in Fig. 1 schematisch dargestellte Kraftfahrzeug 1 soll in diesem Ausführungsbeispiel ein Nutzfahrzeug sein, welches eine lenkbare Vorderachse 2 mit Vorderrädern 3 und eine antreibbare Hinterachse 9 mit Hinterrädern 10 aufweist. Das Kraftfahrzeug 1 weist einen Verbrennungsmotor 5 auf, welcher über ein Getriebe 6, eine Kardanwelle 7, ein Differentialgetriebe 8 und Antriebswellen der Hinterachse 9 die Hinterräder 10 antreibt. Die Fahrzeugräder 3, 10 sind mittels jeweils zugeordneten, druckmittelbetätigbaren Bremsvorrichtungen 4, 11 abbremsbar. Die Lenkung der Vorderräder 3 erfolgt mittels eines nicht dargestellten Lenkrades für den Fahrzeugführer sowie mittels einer an der Vorderachse 2 angeordneten Lenkvorrichtung 26. Im dargestellten Ausführungsbeispiel ist die Lenkvorrichtung 26 zumindest zusätzlich hydraulisch betätigbar ausgebildet. Das Kraftfahrzeug 1 verfügt außerdem über eine Mehrzahl von Sensoren 14, 15, 16, 17, welche über als gepunktete Linien dargestellte Sensorleitungen 18, 19, 20, 21 mit einem Fahrsicherheits- oder Fahrerassistenzsystem 12 verbunden sind. Dieses Fahrsicherheits- oder Fahrerassistenzsystem 12 weist zumindest einen Computer 13 auf, welcher die Signale der Sensoren 14, 15, 16, 17 empfängt und gemäß im Computer 13 abgespeicherten Datenverarbeitungsprogrammen auswertet. Als Folge dieser Datenverarbeitung gibt der Computer 13 Steuerbefehle an eine elektrohydraulische oder elektropneumatische Steuereinheit 27 ab, welche ebenfalls zu dem Fahrsicherheits- oder Fahrerassistenzsystem 12 gehört oder von diesem zumindest ebenfalls ansteuerbar ist. Diese Steuereinheit 27 schaltet aufgrund empfangener Steuerbefehle hydraulische oder pneumatische Steuerdrücke oder Arbeitsdrücke über Druckmittelleitungen 22, 23, 24, 25 zu den Bremsvorrichtungen 4, 11 an den jeweiligen Fahrzeugrädern 3, 11 durch, so dass diese das Kraftfahrzeug 1 abbremsend betätigt werden können. Bei Bedarf kann die Steuereinheit 27 des Fahrsicherheits- oder Fahrerassistenzsystems 12 auch die Lenkvorrichtung 26 über eine Druckmittelleitung 28 mit einem Steuer- oder Arbeitsdruck beaufschlagen, in dessen Folge eine von Fahrzeugführer veranlasste Lenkbewegung unterstützt oder übersteuert wird. Bei den Sensoren 14, 15, 16, 17, welche dem Computer 13 des Fahrsicherheits- oder Fahrerassistenzsystem 12 Auskunft über die Umgebung des Kraftfahrzeugs 1 sowie über die aktuelle Verkehrssituation geben, kann es sich beispielsweise um Sensoren eines Radar-Systems, um Sensoren eines Lidar-Systems, Geschwindigkeitssensoren, optische Kameras und/oder Beschleunigungssensoren handeln.

Zur vergleichsweise groben graphischen Veranschaulichung der Abläufe bei der Nutzung des Verfahrens gemäß der Erfindung wird nachfolgend auf Fig. 2 Bezug genommen. Das dort dargestellte Ablaufdiagramm zeigt mehrere übergeordnete Verfahrensschritte in Form von Blöcken A bis H. Zunächst wird in einem ersten Schritt A überprüft, ob die Fahrt des Kraftfahrzeugs begonnen hat. Sofern der Fahrtbeginn festgestellt wurde, wird das Fahrsicherheits- oder Fahrerassistenzsystems 12 mit einem Hilfsverfahren gestartet (Schritt B), welches einen Betrieb des Fahrsicherheits- oder Fahrerassistenzsystems 12 mit einem gegenüber einem Normalbetrieb reduzierten Funktionsumfang und/oder einer reduzierten Eingangsempfindlichkeit ermöglicht. Für den Betrieb des Fahrsicherheits- oder Fahrerassistenzsystems 12 mit dem Hilfsverfahren werden vorläufige Sensordaten sowie vorläufige Parametereinstellungen genutzt (Schritt C), welche bei vorherigen Fahrten des Kraftfahrzeugs gesammelt wurden und/oder welche in dem Computer 13 des Fahrsicherheits- oder Fahrerassistenzsystem 12 herstellerseitig abgespeichert wurden. Diese vorläufigen Sensordaten und vorläufigen Parametereinstellungen werden als vorläufig bezeichnet, weil sie noch nicht oder noch nicht ausreichend als für einen optimalen Normalbetrieb des Fahrsicherheits- oder Fahrerassistenzsystems 12 geeignet überprüft wurden.

Das Kraftfahrzeug 1 befährt im weiteren zeitlichen Verlauf unter Nutzung dieses Hilfsverfahrens mit eingeschränktem Funktionsumfang des Fahrsicherheits- oder Fahrerassistenzsystems 12 eine vorher festgelegte Fahrstrecke von beispielsweise 10 km Länge (Schritt D) ab. In dieser Betriebsphase (Schritt D) werden auch die vorläufigen Sensordaten und vorläufigen Parametereinstellungen dahingehend überprüft, ob diese Sensordaten plausibel sind und diese Parametereinstellungen für die aktuelle Betriebssituation des Kraftfahrzeugs geeignet sind. Sofern sie plausibel und geeignet sind, werden diese Parametereinstellungen als gültige Parametereinstellungen in dem Steuergerät abgespeichert (Schritt F) sowie für den aktuellen und zukünftigen Fahrbetrieb verwendet.

Sobald im Schritt E festgestellt wurde, dass die zuvor festgelegte Fahrstrecke durch das Kraftfahrzeug vollständig befahren wurde, wird im Schritt G der Betrieb des Hilfsverfahrens beendet und auf einen Normalbetrieb des Fahrsicherheits- oder Fahrerassistenzsystems 12 umgeschaltet (Schritt H), welches dann mit seinem vollem Funktionsumfang die aktuellen Sensordaten und die zuvor als gültig bestimmten Parametereinstellungen nutzt. Sofern es sich herausstellt, dass die Länge der befahrenen Fahrstrecke nicht ausreichte, um alle Sensordaten und Parametereinstellungen auf deren Plausibilität zu überprüfen, dann kann die Fahrstrecke und damit die notwendige Dauer des Verfahrens zum Hilfsbetrieb des Fahrsicherheits- oder Fahrerassistenzsystems bei Bedarf verlängert werden.

## Patentansprüche

1. Verfahren zum Betrieb eines autonom arbeitenden Fahrsicherheits- oder Fahrerassistenzsystems (12) eines Kraftfahrzeugs (1), welches ständig fahrzeugbezogene und/oder fahrzeugumfeldbezogene Daten erfasst, welches auf der Grundlage dieser Daten ständig wiederholend eine Entscheidung darüber trifft, ob ein Fahrsicherheits- oder Fahrerassistenzsystemvorgang autonom eingeleitet oder durchgeführt werden soll, und welches einen Überprüfungsvorgang durchführt, bei dem für den Betrieb des Fahrsicherheits- oder Fahrerassistenzsystems (12) notwendige Sensordaten und Parametereinstellungen auf ihre Plausibilität überprüft werden, **dadurch gekennzeichnet, dass** der Überprüfungsvorgang unmittelbar nach dem Fahrtbeginn des Kraftfahrzeugs (1) durchgeführt wird, wobei in dem Zeitraum zwischen dem Fahrtbeginn des Kraftfahrzeugs (1) und dem Beginn des Betriebs des Fahrsicherheits- oder Fahrerassistenzsystems (12) während eines Überprüfungszeitraumes ein Hilfsverfahren für einen sofortigen und sicheren Hilfsbetrieb des Fahrsicherheits- oder Fahrerassistenzsystems (12) mit geringfügig reduziertem Funktionsumfang genutzt wird.

2. Verfahren nach Anspruch 1, **dadurch gekennzeichnet, dass** das Fahrsicherheits- oder Fahrerassistenzsystem (12) als ein autonom arbeitendes Notbremssystem, als ein Abstands- und Geschwindigkeitsregelsystem, und/oder als ein Lenkeingriffssystem tätig ist.

3. Verfahren nach Anspruch 1 oder 2, **dadurch gekennzeichnet, dass** während des Hilfsbetriebs eines als Notbremssystem tätigen Fahrsicherheits- oder Fahrerassistenzsystems (12) ein Grenzwert für eine maximal wirksame Bremskraft einer durch das Notbremssystem ansteuerbaren Bremsanlage (4, 11) des Kraftfahrzeugs (1) herabgesetzt wird.

4. Verfahren nach einem der Ansprüche 1 bis 3, **dadurch gekennzeichnet, dass** bei einem als Notbremssystem tätigen Fahrsicherheits- oder Fahrerassistenzsystem (12) ständig antriebsrelevante Daten des Kraftfahrzeugs (1), fahrstreckenbezogene, verkehrsbezogene und/oder umweltbezogene Daten sowie Daten zur Beurteilung der Fahraktivitäten des Fahrers des Kraftfahrzeugs (1) erfasst werden, dass ständig der Ort, die Geschwindigkeit und die Beschleunigung wenigstens eines vorausfahrenden Kraftfahrzeugs und/oder der Ort wenigstens eines ortsfesten Hindernisses erfasst wird, und dass auf der Grundlage der erfassten Daten ständig wiederholend eine Entscheidung darüber getroffen wird, ob eine Kollision des Kraftfahrzeugs (1) mit wenigstens einem vorausfahrenden Fahrzeug und/oder einem vorausliegenden ortsfesten Hindernis verhindernder oder zumindest die Folgen einer solchen Kollision verringernder Notbremsvorgang autonom eingeleitet oder durchgeführt werden soll, wobei das Hilfsverfahren zum Hilfsbetrieb des Fahrsicherheits- oder Fahrerassistenzsystems (12) zuvor festgelegte Annahmen und/oder sofort verfügbare Daten über den Betriebszustand des Kraftfahrzeugs (1), über die Geometrie der aktuellen Fahrstrecke, über einen aktuellen Fahrgeschwindigkeitsbereich des Kraftfahrzeugs (1), über die aktuelle Verkehrssituation sowie über die aktuellen Fahraktivitäten des Fahrers nutzt, wobei während des Ablaufs des Hilfsverfahrens die für den Betrieb des Verfahrens notwendigen Sensordaten und Parametereinstellungen auf ihre Plausibilität überprüft werden, und wobei während des Ablaufs des Hilfsverfahrens aus plausiblen Sensordaten und Parametereinstellungen ein Start-Szenario mit den Anfangssensordaten und Anfangsparametereinstellungen für den Beginn des Betriebs des Fahrsicherheits- oder Fahrerassistenzsystems (12) mit nicht reduziertem Funktionsumfang erzeugt wird.

5. Verfahren nach einem der Ansprüche 1 bis 4, **dadurch gekennzeichnet, dass** die während des Betriebs des Hilfsverfahrens genutzten, zuvor festgelegten Daten und Parameter sukzessive durch ermittelte, auf ihre Plausibilität überprüfte Daten und Parameter ersetzt und/oder ergänzt werden.

6. Verfahren nach einem der Ansprüche 1 bis 5, **dadurch gekennzeichnet, dass** der Überprüfungszeitraum, in dem der Überprüfungsvorgang durchgeführt wird, während dem die für den Betrieb des Fahrsicherheits- oder Fahrerassistenzsystems (12) notwendigen Sensordaten und Parametereinstellungen auf ihre Plausibilität überprüft werden und in dem das Hilfsverfahren zum Hilfsbetrieb des Fahrsicherheits- oder Fahrerassistenzsystems (12) genutzt wird, der Zeitraum vom Fahrtbeginn bis zum erfolgreichen Abschluss aller Überprüfungs- und Plausibilisierungstätigkeiten ist.

7. Verfahren nach einem der Ansprüche 1 bis 5, **dadurch gekennzeichnet, dass** der Überprüfungszeitraum, in dem der Überprüfungsvorgang durchgeführt wird, bei dem die für den Betrieb des Fahrsicherheits- oder Fahrerassistenzsystems (12) notwendigen Sensordaten und Parametereinstellungen auf ihre Plausibilität überprüft werden und in dem das Hilfsverfahren zum Hilfsbetrieb des Fahrsicherheits- oder Fahrerassistenzsystems (12) genutzt wird, ein Zeitraum ist, in dem das Kraftfahrzeug (1) eine Fahrstrecke bestimmter minimalen Länge zurücklegt.

8. Verfahren nach Anspruch 7, **dadurch gekennzeichnet, dass** der Überprüfungszeitraum ein Zeitraum ist, in dem das Kraftfahrzeug (1) eine Fahrstrecke zwischen 2 km und 15 km zurücklegt.

9. Verfahren nach einem der Ansprüche 1 bis 8, **dadurch gekennzeichnet, dass** als eine erste Annahme für das Hilfsverfahren zum Hilfsbetrieb des Fahrsicherheits- oder Fahrerassistenzsystems (12) eine zumindest annähernd kurvenfreie Fahrstrecke angenommen wird.

10. Verfahren nach Anspruch 9, **dadurch gekennzeichnet, dass** für die Fahrstrecke für das Hilfsverfahren ein Kurvenradius von |r_{curve}| > 1000 m angenommen wird.

11. Verfahren nach einem der Ansprüche 1 bis 10, **dadurch gekennzeichnet, dass** als eine zweite Annahme für das Hilfsverfahren zum Hilfsbetrieb des Fahrsicherheits- oder Fahrerassistenzsystems (12) ein begrenzter Fahrgeschwindigkeitsbereich angenommen wird.

12. Verfahren nach Anspruch 11, **dadurch gekennzeichnet, dass** ein Fahrgeschwindigkeitsbereich für das Hilfsverfahren von 60 km/h < v_{vehicle} < 90 km/h angenommen wird.

13. Verfahren nach einem der Ansprüche 1 bis 12, **dadurch gekennzeichnet, dass** als eine dritte Annahme für das Hilfsverfahren zum Hilfsbetrieb des Fahrsicherheits- oder Fahrerassistenzsystems (12) angenommen wird, dass sich ein vorausfahrendes Fahrzeug relativ zum eigenen Fahrzeug mit einer begrenzten Geschwindigkeit in Querrichtung zur Hauptfahrtrichtung des eigenen Kraftfahrzeugs (1) bewegt.

14. Verfahren nach Anspruch 13, **dadurch gekennzeichnet, dass** für das Hilfsverfahren eine relative Quergeschwindigkeit eines erkannten vorausfahrenden Kraftfahrzeugs von |v_{y}| < 0,5 m/s angenommen wird.

15. Verfahren nach einem der Ansprüche 1 bis 14, **dadurch gekennzeichnet, dass** als eine vierte Annahme für das Hilfsverfahren zum Hilfsbetrieb des Fahrsicherheits- oder Fahrerassistenzsystems (12) angenommen wird, dass ein detektiertes Objekt sich für einen Mindestzeitraum im Fahrzeugumfeld befindet.

16. Verfahren nach Anspruch 15, **dadurch gekennzeichnet, dass** für das Hilfsverfahren ein Mindestzeitraum, in dem sich ein detektiertes Objekt im Fahrzeugumfeld befindet von t_{obj} > 3 s angenommen wird.

17. Verfahren nach einem der Ansprüche 1 bis 16, **dadurch gekennzeichnet, dass** als eine fünfte Annahme für das Hilfsverfahren zum Hilfsbetrieb des Fahrsicherheits- oder Fahrerassistenzsystems (12) anhaltende Fahrzeuge als stationäre Hindernisse angenommen werden.

## Claims

1. Method for operating an autonomously operating driving safety or driver assistance system (12) of a motor vehicle (1), which continuously records vehicle-related and/or vehicle surroundings-related data, which continuously repeatedly makes a decision based on said data regarding whether a driving safety or driver assistance system process is to be autonomously initiated or carried out, and which carries out a checking process, during which sensor data and parameter settings that are necessary for the operation of the driving safety or driver assistance system (12) are checked for the plausibility thereof, **characterized in that** the checking process is carried out immediately following the start of travel of the motor vehicle (1), wherein in the period of time between the start of travel of the motor vehicle (1) and the start of the operation of the driving safety or driver assistance system (12) an auxiliary method for an immediate and safe auxiliary mode of the driving safety or driver assistance system (12) with slightly reduced functional scope is used during a checking period.

2. Method according to Claim 1, **characterized in that** the driving safety or driver assistance system (12) acts as an autonomously operating emergency brake system, as a distance and speed regulating system and/or as a steering intervention system.

3. Method according to Claim 1 or 2, **characterized in that** during the auxiliary mode of a driving safety or driver assistance system (12) operating as an emergency brake system, a limit value for a maximum effective brake force of a brake system (4, 11) of the motor vehicle (1) that is activated by the emergency brake system is reduced.

4. Method according to any one of Claims 1 to 3, **characterized in that** for a driving safety or driver assistance system (12) operating as an emergency brake system, drive-related data of the motor vehicle (1), route-related, traffic-related and/or environment-related data as well as data for assessing the driving activities of the driver of the motor vehicle (1) are continuously recorded, that the position, the speed and the acceleration of at least one motor vehicle ahead and/or the position of at least one stationary obstacle are recorded continuously, and that based on the recorded data a decision is made continuously and repeatedly regarding whether an emergency braking process preventing a collision of the motor vehicle (1) with at least one vehicle ahead and/or a stationary obstacle ahead, or at least reducing the consequences of such a collision, is to be autonomously initiated or carried out, wherein the auxiliary method for the auxiliary mode of the driving safety or driver assistance system (12) uses previously determined assumptions and/or immediately available data about the operating state of the motor vehicle (1), about the geometry of the current route, about a current range of driving speeds of the motor vehicle (1), about the current traffic situation as well as about the current driving activities of the driver, wherein during the course of the auxiliary process the sensor data and parameter settings that are necessary for the operation of the method are checked for the plausibility thereof, and wherein during the course of the auxiliary process a start scenario with the initial sensor data and initial parameter settings and with non-reduced functional scope is generated from plausible sensor data and parameter settings for the start of the operation of the driving safety or driver assistance system (12).

5. Method according to any one of Claims 1 to 4, **characterized in that** the previously determined data and parameters used during the operation of the auxiliary method are successively replaced and/or supplemented by determined data and parameters that have been checked for the plausibility thereof.

6. Method according to any one of Claims 1 to 5, **characterized in that** the checking period in which the checking process is carried out, during which the sensor data and parameter settings that are necessary for the operation of the driving safety or driver assistance system (12) are checked for the plausibility thereof and in which the auxiliary method for the auxiliary mode of the driving safety or driver assistance system (12) is used, is the period of time from the start of travel until the successful completion of all checking activities and plausibility check activities.

7. Method according to any one of claims 1 to 5, **characterized in that** the checking period in which the checking process is carried out, during which the sensor data and parameter settings that are necessary for the operation of the driving safety or driver assistance system (12) are checked for the plausibility thereof and in which the auxiliary method for the auxiliary mode of the driving safety or driver assistance system (12) is used, is a period of time in which the motor vehicle (1) covers a driving distance of a certain minimum length.

8. Method according to Claim 7, **characterized in that** the checking period is a period of time in which the motor vehicle (1) covers a driving distance of between 2 km and 15 km.

9. Method according to any one of Claims 1 to 8, **characterized in that** an at least approximately turn-free route is assumed as a first assumption for the auxiliary method for the auxiliary mode of the driving safety or driver assistance system (12).

10. Method according to Claim 9, **characterized in that** a turn radius of |r_{curve}| > 1000 m is assumed for the route for the auxiliary method.

11. Method according to any one of Claims 1 to 10, **characterized in that** a limited range of driving speeds is assumed as a second assumption for the auxiliary method for the auxiliary mode of the driving safety or driver assistance system (12).

12. Method according to Claim 11, **characterized in that** a range of driving speeds of 60 km/h < v_{vehicle} < 90 km/h is assumed for the auxiliary method.

13. Method according to any one of Claims 1 to 12, **characterized in that** as a third assumption for the auxiliary method for the auxiliary mode of the driving safety or driver assistance system (12), it is assumed that a vehicle ahead is moving relative to the subject vehicle with a limited speed in the lateral direction relative to the primary direction of travel of the subject motor vehicle (1).

14. Method according to Claim 13, **characterized in that** a relative lateral speed of a detected motor vehicle ahead of |v_{y}| < 0.5 m/s is assumed for the auxiliary method.

15. Method according to any one of Claims 1 to 14, **characterized in that** as a fourth assumption for the auxiliary method for the auxiliary mode of the driving safety or driver assistance system (12), it is assumed that a detected object is disposed in the surroundings of the vehicle for a minimum period of time.

16. Method according to Claim 15, **characterized in that** a minimum period of time in which a detected object is disposed in the surroundings of the vehicle of t_{obj} > 3 s is assumed for the auxiliary method.

17. Method according to any one of Claims 1 to 16, **characterized in that** as a fifth assumption for the auxiliary method for the auxiliary mode of the driving safety or driver assistance system (12), stopped vehicles are assumed to be stationary obstacles.

## Revendications

1. Procédé pour faire fonctionner un système de sécurité active ou d'assistance à la conduite (12) au fonctionnement autonome d'un véhicule automobile (1), lequel acquiert continuellement des données relatives au véhicule et/ou relatives à l'environnement du véhicule, lequel, en s'appuyant sur ces données, prend continuellement et de manière répétitive une décision à propos de la nécessité d'initier ou d'exécuter une opération du système de sécurité active ou d'assistance à la conduite, et lequel effectue une opération de vérification lors de laquelle la plausibilité des données de capteur et des réglages des paramètres qui sont nécessaires pour le fonctionnement du système de sécurité active ou d'assistance à la conduite (12) est vérifiée, **caractérisé en ce que** l'opération de vérification est effectuée immédiatement après le début du déplacement du véhicule automobile (1), un procédé auxiliaire pour un fonctionnement auxiliaire immédiat et sécurisé du système de sécurité active ou d'assistance à la conduite (12) avec une étendue fonctionnelle légèrement réduite étant utilisé pendant une période de vérification dans la période entre le début du déplacement du véhicule automobile (1) et le début du fonctionnement du système de sécurité active ou d'assistance à la conduite (12).

2. Procédé selon la revendication 1, **caractérisé en ce que** le système de sécurité active ou d'assistance à la conduite (12) est actif en tant que système de freinage d'urgence à fonctionnement autonome, en tant que système de régulation de la distance et de la vitesse et/ou en tant que système d'intervention dans la direction.

3. Procédé selon la revendication 1 ou 2, **caractérisé en ce que** pendant le fonctionnement auxiliaire d'un système de sécurité active ou d'assistance à la conduite (12) actif en tant que système de freinage d'urgence, une valeur limite pour une force de freinage maximale appliquée d'un système de freinage (4, 11) du véhicule automobile (1) pouvant être commandé par le système de freinage d'urgence est abaissée.

4. Procédé selon l'une des revendications 1 à 3, **caractérisé en ce que** dans le cas d'un système de sécurité active ou d'assistance à la conduite (12) actif en tant que système de freinage d'urgence, des données relatives à la propulsion du véhicule automobile (1), des données relatives au trajet, relatives au trafic et/ou relatives à l'environnement ainsi que des données destinées à évaluer les activités de conduite du conducteur du véhicule automobile (1) sont continuellement acquises, **en ce que** le lieu, la vitesse et l'accélération d'au moins un véhicule automobile qui précède et/ou le lieu d'au moins un obstacle fixe sont constamment acquis, et **en ce qu'**une décision est prise constamment et de manière répétée sur la base des données acquises à propos de la nécessité d'initier ou d'exécuter de manière autonome une opération de freinage d'urgence visant à éviter une collision du véhicule automobile (1) avec au moins un véhicule qui précède et/ou un obstacle fixe se trouvant à l'avant ou au moins à réduire les conséquences d'une telle collision, le procédé auxiliaire pour un fonctionnement auxiliaire du système de sécurité active ou d'assistance à la conduite (12) utilisant des hypothèses préalablement fixées et/ou des données disponibles immédiatement à propos de l'état de fonctionnement du véhicule automobile (1), à propos de la géométrie du trajet actuel, à propos d'une plage de vitesses de déplacement actuelle du véhicule automobile (1), à propos de la situation de trafic actuelle ainsi qu'à propos des activités de conduite actuelles du conducteur, la plausibilité des données de capteur et des réglages des paramètres qui sont nécessaires pour la mise en oeuvre du procédé étant vérifiée pendant le déroulement du procédé auxiliaire, et un scénario de démarrage avec les données de capteur initiales et les réglages des paramètres initiaux pour le début du fonctionnement du système de sécurité active ou d'assistance à la conduite (12) avec une étendue fonctionnelle non réduite étant généré pendant le déroulement du procédé auxiliaire à partir des données de capteur et des réglages des paramètres plausibles.

5. Procédé selon l'une des revendications 1 à 4, **caractérisé en ce que** les données et les paramètres préalablement définis qui sont utilisés pendant la mise en oeuvre du procédé auxiliaire sont remplacés et/ou complétés successivement par des données et des paramètres déterminés dont la plausibilité a été vérifiée.

6. Procédé selon l'une des revendications 1 à 5, **caractérisé en ce que** la période de vérification dans laquelle est effectuée l'opération de vérification, pendant laquelle la plausibilité des données de capteur et des réglages des paramètres qui sont nécessaires pour le fonctionnement du système de sécurité active ou d'assistance à la conduite (12) est verifiée et dans laquelle le procédé auxiliaire est utilisé pour le fonctionnement auxiliaire du système de sécurité active ou d'assistance à la conduite (12), est la période à partir du début du déplacement jusqu'à l'achèvement réussi de toutes les activités de contrôle et de vérification de la plausibilité.

7. Procédé selon l'une des revendications 1 à 5, **caractérisé en ce que** la période de vérification dans laquelle est effectuée l'opération de vérification, lors de laquelle la plausibilité des données de capteur et des réglages des paramètres qui sont nécessaires pour le fonctionnement du système de sécurité active ou d'assistance à la conduite (12) est verifiée et dans laquelle le procédé auxiliaire est utilisé pour le fonctionnement auxiliaire du système de sécurité active ou d'assistance à la conduite (12), est une période dans laquelle le véhicule automobile (1) parcourt un trajet ayant une longueur minimale donnée.

8. Procédé selon la revendication 7, **caractérisé en ce que** la période de vérification est une période dans laquelle le véhicule automobile (1) parcourt un trajet entre 2 km et 15 km.

9. Procédé selon l'une des revendications 1 à 8, **caractérisé en ce qu'**une première hypothèse adoptée pour le procédé auxiliaire destiné au fonctionnement auxiliaire du système de sécurité active ou d'assistance à la conduite (12) est un trajet au moins approximativement dépourvu de virages.

10. Procédé selon la revendication 9, **caractérisé en ce qu'**un rayon de virage |r_{curve}| > 1000 m est supposé pour le trajet pour le procédé auxiliaire.

11. Procédé selon l'une des revendications 1 à 10, **caractérisé en ce qu'**une deuxième hypothèse adoptée pour le procédé auxiliaire destiné au fonctionnement auxiliaire du système de sécurité active ou d'assistance à la conduite (12) est une plage de vitesses de déplacement limitée.

12. Procédé selon la revendication 11, **caractérisé en ce qu'**une plage de vitesses de déplacement de 60 km/h < v_{vehicle} < 90 km/h est supposée pour le procédé auxiliaire.

13. Procédé selon l'une des revendications 1 à 12, **caractérisé en ce qu'**une troisième hypothèse adoptée pour le procédé auxiliaire destiné au fonctionnement auxiliaire du système de sécurité active ou d'assistance à la conduite (12) est qu'un véhicule qui précède se déplace par rapport au véhicule propre avec une vitesse limitée dans la direction transversale par rapport au sens de déplacement principal du véhicule automobile (1) propre.

14. Procédé selon la revendication 13, **caractérisé en ce qu'**une vitesse transversale relative d'un véhicule automobile qui précède détecté égale à |v_{y}| < 0,5 m/s est supposée pour le procédé auxiliaire.

15. Procédé selon l'une des revendications 1 à 14, **caractérisé en ce qu'**une quatrième hypothèse adoptée pour le procédé auxiliaire destiné au fonctionnement auxiliaire du système de sécurité active ou d'assistance à la conduite (12) est qu'un objet détecté se trouve dans l'environnement du véhicule pendant une période minimale.

16. Procédé selon la revendication 15, **caractérisé en ce qu'**une période minimale dans laquelle un objet détecté se trouve dans l'environnement du véhicule égale à t_{obj} > 3 s est supposée pour le procédé auxiliaire.

17. Procédé selon l'une des revendications 1 à 16, **caractérisé en ce qu'**une cinquième hypothèse adoptée pour le procédé auxiliaire destiné au fonctionnement auxiliaire du système de sécurité active ou d'assistance à la conduite (12) est que les obstacles fixes sont des véhicules à l'arrêt.
